# EUROPÄISCHE PATENTANMELDUNG

(11) **EP 2 868 602 A1**
(43) Veröffentlichungstag der Anmeldung: **06.05.2015**
(21) Anmeldenummer: 13190902.0
(22) Anmeldetag: 30.10.2013
(51) Int. Cl.: B65G 59/06

(54) **Vorrichtung und Verfahren zur Vereinzelung von Lebensmittelscheiben**

(71) Anmelder: Hammerschmid Maschinenbau Gmbh, 4190 Bad Leonfelden (AT)
(72) Erfinder: Reingruber, Martin, A-4191 Vorderweissenbach (AT)
(74) Vertreter: Allwardt, Anke

(57) **Zusammenfassung**

Die vorliegende Erfindung betrifft eine Vorrichtung (1) zur Vereinzelung von in Stapeln (4) bereitgestellten Scheiben (2) von Lebensmitteln mit einem Schacht (6) zur Aufnahme des Stapels (4) von Scheiben (2) und Führung der Scheiben (2) in eine Vorschubrichtung (7), sowie einem Auswerfer (15), welcher am Ende des Schachts (6) angeordnet ist und welcher im wesentlichen orthogonal zum Schacht (6) einen beweglichen Stössel (17) zum Auswurf einer der Scheiben (2) aufweist.

Entsprechend der vorliegende Erfindung ist dabei am Ende des Schachts (6) vor dem Auswerfer (15) eine Rückhaltevorrichtung (14) angeordnet, mit welcher eine vorletzte Scheibe (2b) im Schacht (6) in Vorschubrichtung (7) fixierbar ist, bevor der Auswurf einer letzten Scheibe (2a) mit dem Auswerfer (15) erfolgt.

## Beschreibung

Die Erfindung betrifft eine Vereinzelungsvorrichtung zur Vereinzelung von in Stapeln bereitgestellten Scheiben von Lebensmitteln nach den Oberbegriffen der Anspruchs 1 und Anspruch 10 sowie Verfahren zur Vereinzelung von Scheiben von Lebensmitteln gemäß Oberbegriff des Anspruchs 10.

Lebensmittel werden vielfach in größeren Blöcken produziert, welche infolge in ihre spätere Anwendungsform zerschnitten werden, um weiterverarbeitet zu werden. Dabei werden die Blöcke meist in eine Mehrzahl von Scheiben getrennt, wobei die Scheiben dann in Blockform als Stapel von übereinander liegenden Scheiben verpackt oder direkt weiterverarbeitet werden. Die Scheiben haben dabei eine flächig Ausdehnung und eine Scheiben-Dicke, welche geringer ist als die seitlichen Abmessungen der Scheiben-Fläche - welche meist durch die Schnittfläche gebildet wird. Die hier beschriebenen Stapel von Lebensmittelscheiben können aber auch als einzelne Scheiben produziert werden, welche infolge turmartig zu einem Stapel übereinander gelegt werden, wobei insbesondere die Umrisse der Scheibe annähernd exakt übereinander zu liegen kommen, also nicht etwa geschindelt werden.

Beispielsweise wird Brot in Laiben geformt, welche dann gebacken bzw. nur angebacken werden und erst im Anschluss in Scheiben geschnitten werden. Die beim Schneiden entstehenden Stapel von Scheiben werden dann zur Weiterverarbeitung weitergereicht, entweder direkt, oder indem sie abgepackt und einer Weiterverarbeitung zugeliefert werden. Die Brotscheiben werden dann z.B. mit weiteren Zutaten belegt, bestrichen, garniert, verziert, in Form geschnitten, aufgebacken, abgepackt, etc. - etwa um belegte Brote oder Sandwichs herzustellen. Zu Transport- und/oder Lagerzwecken der Scheiben-Stapel zum oder beim Weiterverarbeiter können diese auch gekühlt oder eingefroren werden.

Andere Beispiele sind etwa Leberkäse, Pressschinken, Käse, oder andere Lebensmittel, welche in meist annähernd quaderförmigen Barren geformt und dann zerschnitten und abgepackt werden. Hiezu können beispielsweise so genannten Gatterbrotschneidemaschinen oder funktional ähnliche Geräte, verwendet werden. Beispielsweise zeigen GB 2445 557, DE 10 2010 060 325, oder DE 93 10 344 Einrichtungen zur Erzeugung von Scheiben-Stapeln und anschließendem Verpacken derselben.

Für den Weiterverarbeiter besteht die Aufgabe darin, die bereits geschnittenen Scheiben der angelieferten Stapel wieder zu vereinzeln und gegebenenfalls auch die vereinzelten Scheiben derart anzuordnen, dass diese definiert zueinander positioniert und orientiert sind, um eine maschinelle Weiterverarbeitung zu ermöglichen. Aufgrund der im Folgenden näher beschriebenen Probleme, wird dies bisher in der Regel von Hand gemacht, was entsprechend personal- und zeitintensiv ist.

Häufig haften die in Stapeln oder Blöcken vorliegenden Scheiben von Lebensmitteln derart aneinander, dass sie sich weder von selbst voneinander lösen, noch zuverlässig und beschädigungsfrei maschinell voneinander lösen lassen. Dies wird beispielsweise auch in DE 44 25 292 beschrieben und durch Einbringen von Zwischenlagen zwischen die einzelnen Scheiben gelöst, was jedoch zusätzlichen Materialaufwand, Abfall und Aufwand für das Entfernen der Zwischenlagen mit sich bringt, also primär für den Privatgebrauch und weniger für die Industrie geeignet ist.

Eine weitere Problematik besteht darin, dass die einzelnen Scheiben im Allgemeinen nicht formstabil sind. Die Scheiben lassen sich nicht einfach mit einem Zangengreifer von herkömmlichen Manipulationsgeräten an den schmalseitigen Rändern anpacken, da sie sich leicht verformen oder zerquetscht werden; dazu neigen sich zu verbiegen und dem Greifer zu entgleiten; oder gar zu zerbrechen, insbesondere wenn die Scheiben bei einer maschinellen Vereinzelung mit hohen Taktraten zu harsch angepackt werden. Auch ein einfaches Ausschieben der jeweils letzten Scheibe des Stapels mit einem Stempel, wie etwa von DE 10 2011 050 503 bekannt, ist nicht möglich, da dies die aneinanderhaftenden Scheiben beschädigen, zerquetschen oder zerreißen würde.

CN 201782630 U zeigt einen Toaster mit einem Trenngestell, welches zwischen zwei Brotscheiben eingeschoben wird um diese zu trennen und einem Schaber zur seitlichen Zufuhr der getrennten Scheibe zu einer Toaststation. Das Einschieben des Gestells exakt zwischen zwei Scheiben gestaltet sich dabei schwierig, speziell da die Lebensmittelscheiben auch produktbedingt nicht unwesentliche Dickenabweichungen haben können. Wird nicht exakt in den Zwischenraum getroffen, so werden die Scheiben gequetscht, verformt, reißen aus, verklemmen, etc. Die vorgestellte Gerätschaft mag somit zwar Heimanwenderansprüchen bei der Vereinzelung von Scheiben genügen, eignet sich aber nicht zur automatisierten, zuverlässigen Ausführung im industriellen Einsatz.

Auch ein Vereinzelungsprinzip das bei Papierstapeln, etwa wie in EP 2 612 831, angewandt wird, ist - speziell wegen der Haftung und weichen Konsistenz der Scheiben - bei dem vorliegenden Problem nicht anwendbar. Zusätzlich sind bei der industriellen Handhabung von Lebensmitteln noch strenge Hygienevorschriften einzuhalten, sodass Prinzipien aus anderen Technologiegebieten im Allgemeinen nicht einfach in den Lebensmittelbereich übertragbar sind.

Es ist daher eine Aufgabe der vorliegenden Erfindung, ein Verfahren und eine Vorrichtung zur automatischen Vereinzelung von Scheiben aus einem Stapel von Lebensmittelscheiben bereitzustellen, insbesondere für die industrielle Anwendung in Anlagen zur Lebensmittelverarbeitung.

Es ist eine Aufgabe der vorliegenden Erfindung, eine zuverlässige, automatisierte Vereinzelung von Scheiben bereitzustellen, welche sich in industrielle Prozesse einbinden lässt, insbesondere ohne dass die Scheiben oder der Stapel in ihrer Form und/oder in ihren sonstigen Eigenschaften beeinträchtigt werden.

Zumindest eine dieser Aufgaben wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Eine erfindungsgemäße Vereinzelungsvorrichtung zur Vereinzelung von in Stapeln bereitgestellten Scheiben von Lebensmitteln, insbesondere von Brotscheiben, weist einen Schacht zur Aufnahme des Stapels von Scheiben und zur Führung der Scheiben in eine Vorschubrichtung auf sowie einen Auswerfer, welcher in Vorschubrichtung gesehen ausgangsseitig des Schachts angeordnet ist und dem Auswerfen bzw. Fortbewegen einer vereinzelten Scheiben aus der Vereinzelungsvorrichtung dient. Weiter ist in der Vereinzelungsvorrichtung in Vorschubrichtung gesehen im Bereich des ausgangsseitigen Schachtendes vor dem Auswerfer eine Rückhaltevorrichtung vorgesehen, mit welcher eine vorletzte Scheibe des Stapels und mit selbiger der gesamte Stapel im Schacht fixierbar ist. Ebenfalls im Bereich des Schachtendes, der Rückhaltevorrichtung nachgeordnet, ist eine Trennvorrichtung vorgesehen, mit welcher eine letzte Scheibe des Stapels von der vorletzten Scheibe des Stapels ablösbar ist.

Durch die benachbarten Scheiben im Stapel und die Schachtwände, wird die vorletzte Scheibe im Stapel stabilisiert, sodass diese vorletzte Scheibe beim Ergreifen durch die Rückhaltevorrichtung nicht ausweichen und auch nicht verkrümmt, zerrissen oder zerbrochen werden kann. Da die Rückhaltevorrichtung nicht nur die vorletzte Scheibe sondern mit ihr außer der letzten Scheibe alle weiteren Scheiben des Stapels im Schacht fixiert, kann, sobald die Fixierung erfolgt ist, die letzte Scheibe ohne weiteres mittels der Trennvorrichtung von der vorletzten Scheibe und also vom Stapel getrennt und vereinzelt werden.

Der Schacht zur Aufnahme des Stapels ist mit Vorteil vertikal angeordnet, so dass auch die Vorschubrichtung vertikal ist und der Vorschub der Scheiben im Schacht vermittels der Schwerkraft erfolgt, so dass keine gesonderte Vorrichtung für den Scheiben-Stapel im Schacht vorgesehen werden muss.

In einer besonderen Ausführungsform weist die Rückhaltevorrichtung Vorsprünge auf, die in Richtung Schachmitte ausgerichtet sind und insbesondere in Form von Nadeln, Spießen oder Dornen ausgebildet sind. Sie ist in eine geschlossene Stellung und eine geöffnete Stellung bewegbar ist, wobei die Vorsprünge in der geöffneten Stellung außerhalb des Schachts (6) liegen und diesen in Vorschubrichtung (7) freigeben. In der geschlossenen Stellung dringen sie dagegen seitlich in den Schacht und im Betrieb in die vorletzte Scheibe ein und fixieren diese.

Je nach Konsistenz der Scheiben und dem Grad ihres aneinander Haftens kann das Ablösen oder Abtrennen der letzten Scheibe von der vorletzten Scheibe bzw. vom Stapel am Einfachsten bereits durch den Auswerfer erfolgen, der dann zugleich auch als Trennvorrichtung fungiert. Hierzu kann der Auswerfer beispielsweise am ausgangsseitigen Ende des Schachts so angeordnet, dass er zum Beispiel mittels eines im wesentlichen orthogonal am Schachtende vorbeigeführten Stössels die letzte Scheibe sozusagen vom Stapel, der durch die Schachtwände gehalten und stabilisiert wird, abstreift.

In Rege, insbesondere bei leicht feuchten Labensmitteln, wie käse, Wurst, Brot gelingt dies allerdings nicht, da die Scheiben zu fest aneinander haften.

Hier muss die letzte Scheibe von der vorletzten Scheibe in einem separaten Arbeitsschritt getrennt werden, und erst dann kann sie aus der Vereinzelungsvorrichtung hinaus befördert und an eine weiterverarbeitende Anlage oder ein Förderband übergeben werden.

Auch hierfür kann natürlich dann ein Auswerfer der oben beschriebenen Form, mit einem z.B. hydraulisch oder mittels eines Elektromotors linear bewegbaren Stössels verwendet werden.

Als sehr effizient und schonend im Umgang mit Lebensmittelscheiben haben sich Trennvorrichtungen erwiesen, die eine dem ausgangsseitigen Schachtende gegenüberliegende Ansaugeinrichtung umfassen, mit welcher während des Betriebs mittels Unterdruck die letzte Scheibe von der vorletzten Scheibe des Stapels "abgesaugt" werden kann. Das abtrennen oder Ablösen durch Absaugen erfolgt dabei vorteilhaft in Vorschubrichtung, da so die Gefahr für eine Beschädigung der Scheibe am geringsten ist.

Die Ansaugeinrichtung kann vorteilhaft mit einer Ansaugfläche ausgebildet sein, welche zumindest annähernd dieselbe Fläche wie eine der Scheiben und Löcher zur Aufbringung des Unterdruckes und Haltung der darauf liegenden Scheibe aufweist.

Die Ansaugeinrichtung ist vorteilhaft zwischen einer ersten nahe dem Schachtende gelegnen und, insbesondere im Betrieb die letzte Scheibe des Stapels berührenden Stellung, sowie einer zweiten Stellung in größerer Distanz zum Schachtende beweglich. Unterdruck und Bewegungsgeschwindigkeit sind so gewählt sind, dass im Betrieb durch die Bewegung von der ersten in die zweite Stellung, die letzte Scheibe des Stapels von der vorletzten Scheibe abgelöst wird und in der zweiten Stellung die sich auf der Ansaugeinrichtung befindliche letzte Scheibe auswerfbar ist.

Ist der Auswerfer, wie oben beschrieben mit einem linear bewegbaren Stößel ausgestattet, so ist der Stößel bei einer solchen Ausgestaltung der Vereinzelungsvorrichtung vorteilhaft derart über die Ansaugeinrichtung bewegbar ist, dass er im Betrieb eine sich auf der Ansaugeinrichtung befindliche letzte Scheibe vor sich herschiebend aus der Vereinzelungsvorrichtung hinaus befördert.

Aber auch die Trennvorrichtung und insbesondere die Ansaugeinrichtung können zugleich auch als Auswerfer fungieren. Dies kann zum Beispiel dadurch erfolgen, dass die Ansaugeinrichtung eine Aufnahmeplatte aufweist, auf welche die letzte Scheibe des Stapels angesaugt und auf der sie durch Unterdruck festgehalten wird. Diese Ansaugplatte oder auch die gesamte Ansaugeinrichtung können nun beispielsweise verkippbar ausgestaltet und relativ zu einem Förderband oder der Aufnahme einer weiteren Verarbeitungsstation so angeordnet sein, dass beim Verkippen und deaktivieren des Unterdrucks, die vom Stapel abgetrennte, vereinzelte Scheibe von der Ansaugeinrichtung auf das Förderband oder die Aufnahme der weiteren Station fällt oder rutscht.

Der Schacht der Vereinzelungsvorrichtung kann mit einer Schachtüberwachung ausgestattet sein, insbesondere mit einem berührungslosen Abstandssensor an der dem Auswerfer gegenüberliegenden Seite des Schachts, speziell zur Ansteuerung einer Füllstands-Warneinrichtung, welche auf einer ersten Warnstufe ein Warnsignal zum Nachfüllen des Schachts mit einem neuen Stapel ausgibt und/oder in einer zweiten Warnstufe ein Haltesignal zum Bremsen oder Stoppen der Vereinzelungsvorrichtung selbst und/oder einer der Vereinzelungsvorrichtung folgenden, weiterverarbeitenden Anlage ausgibt. Mit der Schachtüberwachung kann auch ein Eingreifen in einen Bereich der Rückhaltevorrichtung des Schachts mit der Hand, insbesondere bei einem Nachladen von Scheiben, detektierbar sein, worauf die in Schachtüberwachung in Folge ein Notaus der Vereinzelungsvorrichtung ausgelöst wird. Um Beschädigungen der Rückhaltevorrichtung zu vermeiden, kann auch das Eindringen von Fremdkörpern in diesen Bereich detektierbar sein und mit einem entsprechenden Warnsignal oder Notstopp gekoppelt sein.

Die Schachtüberwachung kann für die se Aufgabe einen Sensor aufweisen, der vorteilhaft in Form einer Kamera oder eines berührungsloser Abstandssensor vorliegt, und insbesondere an der dem Schachtende gegenüberliegenden Seite des Schachtsangeordnet ist.

Die Vereinzelungsvorrichtung bzw. ihre einzelnen Teile können pneumatisch und/oder mittels Elektroantrieben betrieben sein.

Es versteht sich, dass die Vereinzelungsvorrichtung aus für die Lebensmittelindustrie zugelassenen Materialien, insbesondere aus rostfreiem Stahl und lebensmittelechten Kunststoffen ausgeführt ist.

-Besonders Vorteilhaft ist eine Vorrichtung zum Vereinzeln von in Stapel vorliegenden Lebensmitteln, die mehrere der oben beschriebenen Vereinzelungsvorrichtungen aufweist, bei der insbesondere mehrere Schächte nebeneinander angeordnet sein. Die Vorrichtung kann die vereinzelten Scheiben dann reihenweise ausgeben, beispielsweise an eine weitere Verarbeitungsstation oder auf ein Förderband, dies insbesondere zeitgleich für alle Schächte.

Somit betrifft die Erfindung ein Verfahren zur Vereinzelung von Scheiben von Lebensmitteln, welche in einem Stapel bereitgestellt werden, welches ein Einlegen des Stapels in einen Schacht umfasst, in welchem die Scheiben in einer definierten Position in einer Vorschubrichtung beweglich sind. Dabei ist die Vorschubrichtung vorzugsweise vertikal nach unten ausgerichtet und die Scheiben werden durch die Schwerkraft nach unten bewegt. Der Stapel wird dann in einer definierten Position im Schacht gehalten, in welcher die vorletzte Scheibe des Stapels ausgangsseitig des Schachts von einer Rückhaltevorrichtung ergreifbar ist. Diese Halten des Stapels in der definierten Position kann beispielsweise durch eine entsprechend am Ende des Schachts positionierte und in ihrer Position einstellbaren Platte, auf welcher der Stapel im Schacht in seiner Endposition aufliegt, erfolgen. Weiter umfasst das verfahren ein Halten einer in Vorschubrichtung vorletzten Scheibe am Ende des Stapels, das mit einer, insbesondere seitlich eingreifenden Rückhaltevorrichtung erfolgt, welche speziell die vorletzte Scheibe in Vorschubrichtung fixiert und diese im Schacht zurückhält und mit ihr alle weiteren Scheiben des Stapels ausser der letzten Scheibe. Daraufhin erfolgen ein Abtrennen der letzten Scheibe vom Stapel und ein Auswerfen dieser vereinzelten, letzten Scheibe, insbesondere in Form einer Übergabe an eine weiterverarbeitende Station oder an ein Förderband.

Besonders vorteilhaft erfolgt das Halten und Fixieren der vorletzte Scheibe und somit des gesamten Stapels mittels der Rückhaltevorrichtung durch ein seitliches Eindrücken von Vorsprüngen, insbesondere von Nadeln, Spießen oder Dornen, der Rückhaltevorrichtung in die vorletzte Scheibe.

Besonders vorteilhaft dringen die Vorsprünge der Rückhaltevorrichtung etwa orthogonal von der Seite in die vorletzte Scheibe ein.

In einer besonderen Ausführungsform können Vorsprünge der Rückhaltevorrichtung symmetrisch von zwei Seiten in die vorletzte Schieibe eindringen oder auch von drei oder vier Seiten.

Besonders gut lassen sich die Scheiben nachher weiterverarbeiten, wenn die Vorsprünge der Rückhaltevorrichtung in zumindest annähernd halber Dicke der vorletzten Scheibe in diese eindringen.

Das Abtrennen der letzten Scheibe von der vorletzten Scheibe des Stapels kann besonders schonend durch Ansaugen der letzten Scheibe mittels Unterdruck einer Ansaugeinrichtung und Wegbewegen der angesaugten Scheibe von der vorletzten Scheibe des Stapels - insbesondere in Vorschubrichtung - mittels der Ansaugeinrichtung erfolgen.

Weiters kann ein Überwachen eines Füllstands an Scheiben im Schacht erfolgen, insbesondere mit einem berührungslosen Abstandssensor oder einer Kamera am Schacht, insbesondere am entgegen der Vorschubrichtung liegenden Ende des Schachts, und ein Ausgeben einer Warnung bei Unterschreiten eines definierten Grenzfüllstands und/oder einem Stillsetzen zumindest der Rückhaltevorrichtung und des Stössel bei Detektion eines Eingriffs in den Schacht in einem Bereich der Rückhaltevorrichtung.

Die Erfindung betrifft auch ein Computerprogrammprodukt mit Programmcode, der auf einem maschinenlesbaren Träger gespeichert ist oder Computer-Daten-Signal, verkörpert durch eine elektromagnetische Welle, zur Durchführung des erfindungsgemässen Verfahrens, insbesondere zur Ansteuerung von pneumatischen oder elektrischen Aktoren der erfindungsgemässen Vorrichtung zur Durchführung des Verfahrens, speziell wenn der Programmcode in einer erfindungsgemässen Vorrichtung bzw. einer Steuereinheit dieser Vorrichtung ausgeführt wird.

Das erfindungsgemässe Verfahren und die erfindungsgemässe Vereinzelungsvorrichtung werden nachfolgend anhand von in den Zeichnungen schematisch dargestellten, konkreten Ausführungsbeispielen rein beispielhaft näher beschrieben, wobei auch auf weitere Vorteile der Erfindung eingegangen wird. Im Einzelnen zeigen:
- Fig. 1: in einer Schnittdarstellung beispielhaft eine ersten Ausführungsform einer erfindungsgemässen Vereinzelungsvorrichtung zur Vereinzelung von Lebensmittelscheiben;
- Fig. 2: beispielhaft eine Explosionsdarstellung von Komponenten der in Figur 1 dargestellten Ausführungsform der erfindungsgemässen Vorrichtung;
- Fig. 3: ein Beispiel einer zweiten Ausführungsform der erfindungsgemässen Vorrichtung in einer perspektivischen Ansicht;
- Fig. 4a bis 4f: eine erste Darstellung eines beispielhaften Ablaufs einer Vereinzelung entsprechend der vorliegenden Erfindung mit der in Fig. 1 gezeigten Ausführungsform;
- Fig. 5a bis Fig. 5i: ein zweites Beispiel eines Ablaufs einer erfindungsgemässen Vereinzelung mit einer anderen Ausführungsform der Vorrichtung;
- Fig. 6a bis Fig. 6f: ein drittes Beispiel eines Ablaufs einer Vereinzelung entsprechend der vorliegenden Erfindung mit einer weiteren Ausführungsform der Vorrichtung;
- Fig. 7a bis Fig. 6d: eine viertes Beispiel eines Ablaufs einer Vereinzelung entsprechend der vorliegenden Erfindung mit einer anderen Ausführungsform der Vorrichtung.

Die Darstellungen in den Figuren dienen lediglich zur Illustration und sind nicht als maßstäblich zu betrachten. Gleiche oder funktional äquivalente Teile sind in den Figuren jeweils mit denselben Bezugszeichen versehen.

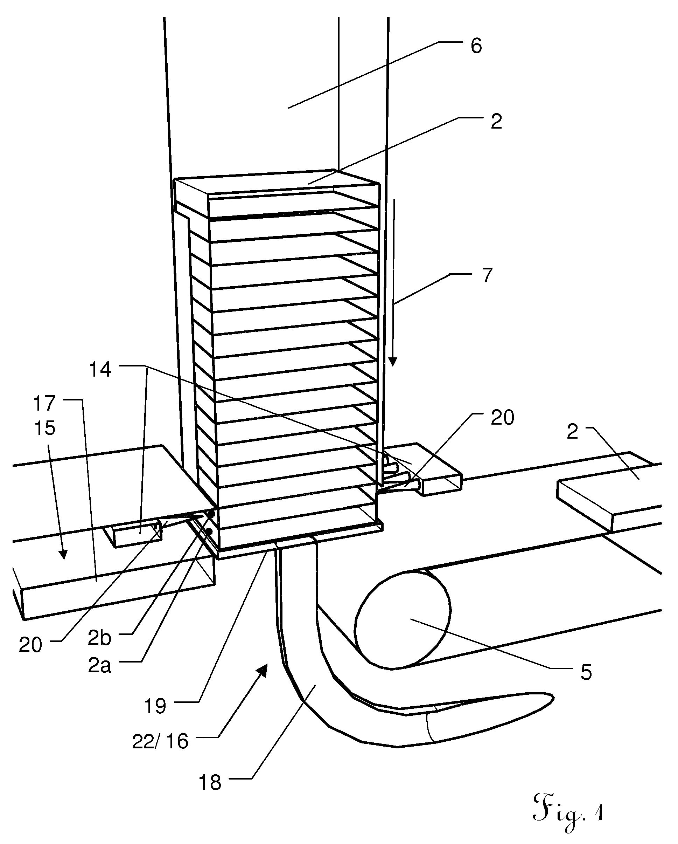

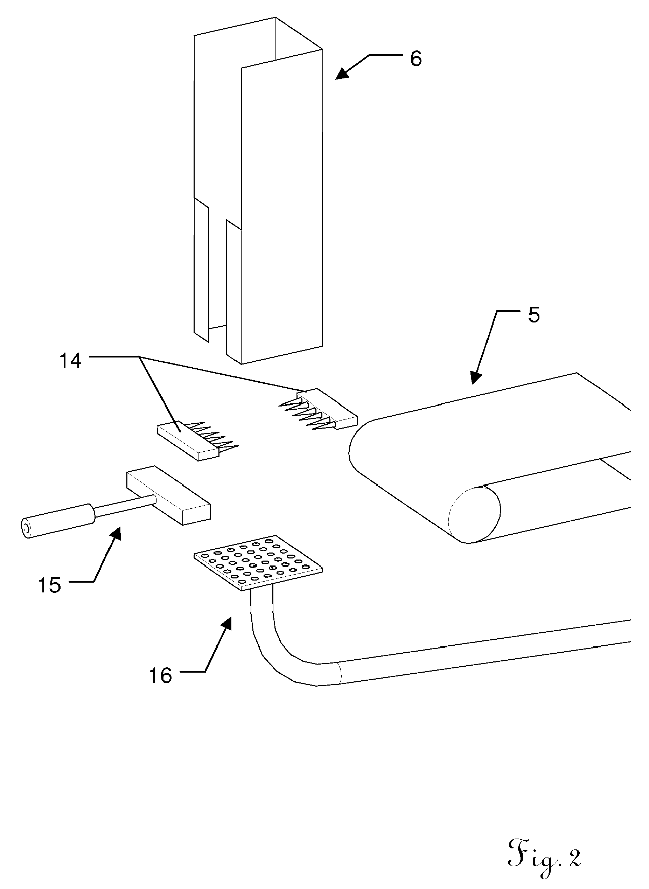

In den Fig. 1 und 2 ist beispielhaft eine erste Ausführungsform einer erfindungsgemässen Vereinzelungsvorrichtung 1 zur Vereinzelung von in Stapeln 4 bereitgestellten Scheiben 2 von Lebensmitteln gezeigt. In Fig. 1 ist dabei eine Schnittdarstellung dieser Ausführungsform im Betriebszustand gezeigt, während Fig. 2 die für die Vereinzelung wichtigen Komponenten in einer Explosionsdarstellung darstellt. Im Folgenden wird anhand der Figuren 1 und 2 sowohl die Vorrichtung 1 als auch das Verfahren zumindest in seinen Grundzügen erläutert.

Scheiben 2 von Lebensmitteln haben sehr häufig eine weiche Konsistenz und neigen dazu im Stapel 4 aneinanderzuhaften, was eine beschädigungsfreie Vereinzelung aus dem Stapel 4 erschwert oder gar verunmöglicht. Die hier beschriebene Vorrichtung 1 und das zugehörige Verfahren sind speziell auf derart aneinanderhaftende Scheiben 2 von Lebensmitteln ausgerichtet. Es versteht sch aber, dass Vorrichtung und Verfahren auch entsprechend auf Scheiben-Stapel 4 aus Nicht-Lebensmitteln mit den zuvor genannten Eigenschaften anwendbar wären und auch Scheiben 2, welche in Stapeln 4 nicht aneinanderhaften, könnten hiermit vereinzelt werden. Die in der erfindungsgemäßen Vereinzelungsvorrichtung und dem erfindungsgemäß Verfahren zu verarbeitenden und in einem Stapel 4 angeordneten Scheiben 2 haben vorzugsweise alle etwa die gleiche Dicke und die gleichen flächigen Dimensionen (Querschnittsform, Länge, Breite).

Es sei hier vorweggeschickt, dass das in den Figuren 1 und 2 jeweils gezeigte Förderband 5 zur Vorrichtung 1 gehören kann, aber nicht zwingend ein Teil der erfindungsgemässen Vereinzelungsvorrichtung 1 sein muss. Es kann auch Teil einer nachgeordneten Anlage eines nachfolgenden Prozessschritts sein.

In dem in Fig. 1 gezeigten Beispiel handelt es sich bei den Scheiben 2 um Brotscheiben, insbesondere um als Kastenbrot gebackene und dann geschnittene und in Form eines quaderförmigen Blocks 4 bzw. Stapels 4 abgepackte Toastbrot-Scheiben. Die Scheiben 2 werden, von einer allfälligen Verpackung befreit, in den in diesem Beispiel ungefähr vertikal ausgerichteten Schacht 6 eingelegt, so dass der Stapel 4 in dem hier gezeigten Beispiel durch die Schwerkraft in ein Vorschubsrichtung 7 verschoben wird. Die in Vorschubsrichtung 7 letzte - in diesem Fall unterste - Scheibe 2a des Stapels 4 liegt schliesslich auf einer bewegbaren Platte 19 auf, die den Schacht 6 an seinem in Vorschubrichtung 7 gesehen ausgangseitigen Ende begrenzt.

Die Platte 19 kann in ihrer relativen Position zum Schacht 6 in Vorschubrichtung 7 variabel eingestellt werden, so dass der Stapel 4 und die im Stapel befindlichen Scheiben 2 beim Aufliegen auf der Platte 19 im Schacht genau passend für die Vereinzelung ausgerichtet werden können. Dies kann einerseits beinhalten, dass z.B. letzte eine letzte Scheibe 2a des Stapel4 noch von Schachtwänden umgeben sein soll oder eben nicht und/oder dass eine vorletzte Scheibe 2b des Stapels 4 in Höhe einer Rückhaltevorrichtung 14 angeordnet sein soll (siehe unten). Alternativ kann auch die Rückhaltevorrichtung 14 in Vorschubrichtung 7 relativ zum Schacht 6 variabel platziert werden, um letzteres zu erreichen, oder beide Elemente, Platte 19 und Rückhaltevorrichtung 14, sind in Vorschubrichtung 7 relativ zum Schacht 6 variabel platzierbar.

Im gezeigten Beispiel ist der Schacht 6 zumindest annähernd vertikal ausgerichtet, wodurch die Scheiben 2 im Schacht 6 durch die Schwerkraft in die Vorschubrichtung 7 nach unten gleiten. Denkbar ist aber auch, dass ein Schacht horizontal oder in einem Winkel zur Vertikalen ausgerichtet ist (nicht dargestellt), wobei der Vorschub in der entsprechenden horizontalen oder im Winkel zur Vertikalen liegenden Richtung dann mittels eines entsprechenden Vorschubsantrieb mit einem entsprechenden Vorschubdruck gewährleistet werden müsste. Ein durch den Vorschubsantrieb auf den Stapel aufzubringender Vorschubdruck - vergleichbar mit dem Gewicht des Stapels bei vertikaler Ausrichtung des Schachts - sollte dabei so gewählt werden, dass er ein problemloses gleiten des Stapels im Schacht ohne verkanten, schräges Abgleiten oder Auseinanderfallen des Stapels gewährleistet. Unabhängig von der Ausrichtung des Schachtes 6 kann das Gleiten der Scheiben 2 im Schacht 6 auch durch Vibrationen des Schachtes 6 unterstützt werden.

Seitlich vom Schacht 6 ist in Höhe der vorletzten Scheibe eine Rückhaltevorrichtungen 14 angeordnet, die in diesem Beispiel zwei einander gegenüberliegenden Teile umfasst, die sich bei geöffneter Stellung der Rückhaltevorrichtung 14 auf zwei einander gegenüberliegenden Seiten des Schachts 6, befinden. Die zwei Teile der Rückhaltevorrichtung 14 sind aufeinanderzu bewegbar und weisen jeweils eine Reihe von zur Schachtmitte hin ausgerichtete spitze Vorsprünge 20, z.B. in Form von Nadeln, Dornen oder Spiessen auf. Beim Schließen der Rückhaltevorrichtung 14 werden diese beiden Teile aufeinanderzu bewegt, so dass die spitzen Vorsprünge 20 wie eine Art Haltekralle annähernd orthogonal zur Längsrichtung des Schachts 6 bzw. zur Vorschubrichtung 7 in den Schacht und in die vorletzte Scheibe 2b des Stapels 4 eindringen, vorzugsweise in etwa im Bereich der halben Dicke der vorletzten Scheibe 2b.

Die Vorsprünge 20 sind dabei derart ausgestaltet, dass sie, wenn sie bei geschlossener Stellung der Rückhaltevorrichtung 14 seitlich in die vorletzte Scheibe 2b eingedrungen sind, die vorletzte Scheibe 2b und mit ihr den gesamten Rest des Stapels 4 in der aktuellen Position halten bzw. zurückgehalten können. Die Platte 19 mit der auf ihr aufliegenden letzten Scheibe 2a kann somit vom Stapel 4 entfernt werden, ohne dass sich die vorletzte Scheibe 2b und der Rest des Stapels 4 bewegen. Um diese Aufgabe erfüllen zu können, werden die Vorsprünge 20 und ihre nötige Eindringtiefe in die vorletzte Scheibe 2b, welche mehrere Millimeter bis hin zu Zentimetern betragen kann, in Abhängigkeit der Scheibenkonsistenz und des voraussichtlichen maximalen Vorschubdruckes bzw. Stapelgewichts gewählt.

In dem hier gezeigten Beispiel ist die Rückhaltevorrichtungen 14 derart ausgebildet, dass sie mit ihren zwei aufeinanderzu bewegbaren Teilen mit Vorsprüngen 20 den Teil des Stapels 4, welcher sich über der Höhe der Rückhaltevorrichtung 14 im Schacht 6 befindet, also speziell alle Scheiben 2 im Schacht 6 bis auf die letzte Scheibe 2a, in Position zu halten vermag. Bei geöffneter Stellung der Rückhaltevorrichtung 14 wird die vorletzte Scheibe 2b einerseits durch den Rest des Stapels 4 und den auf diesem lastenden Vorschubdruck und andererseits durch die auf der am Endes des Schachts angeordneten Platte 19 aufliegende letzte Schiebe 2a sowie durch den Rahmen des Schachts 6 in ihrer Lage und Form stabilisiert. Auf diese Weise ist sichergestellt, dass beim Schliessen der Rückhaltevorrichtung 14 und dem Eindringen der Vorsprünge 20 in die vorletzte Scheibe 2b, selbige nicht verformt oder geknickt wird.

In einer geöffneten Stellung der Rückhaltevorrichtungen 14 liegen die Teile der Rückhaltevorrichtung 14 mit den Vorsprüngen 20 ausserhalb des Schachts 6, so dass sie die Bewegung des Stapels 4 in Vorschubrichtung 7 nicht behindern - sie geben den Schacht also in Vorschubrichtung frei. Die beiden Teile der Rückhaltevorrichtung 14 können beispielsweise pneumatisch mit einem Linearzylinder oder durch einen Elektroantrieb bewegt werden, vorzugsweise über eine Mechanik, welche die Linearzylinderbewegung in zwei zur Achse des Schachts 6 symmetrische linear- oder Schwenkbewegungen umsetzt.

Statt der hier gezeigten zweiteiligen Rückhaltevorrichtung 14 kann eine Rückhaltevorrichtung auch nur ein Teil mit Vorsprüngen 20 aufweisen, dass von einer Seite her in den Schacht und in die vorletzte Scheibe 2b hinein bewegbar ist, wobei die Länge bzw. Eindringtiefe der Vorsprünge 20 in der Regel größer bemessen wird, oder es können drei oder vier in Richtung auf die Schachtmitte hin bewegbare Teile mit Vorsprüngen 20 vorgesehen sein.

Der bereits erwähnten Platte 19 kommt in dieser Ausführungsform der erfindungsgemäßen Vereinzelungsvorrichtung 1 eine Doppelfunktion zu. Zum einen dient sie - in einer ersten Stellung - wie beschrieben als Anschlag am hinteren (hier unteren) Ende des Schachts 6, sodass die eingelegten Scheiben 2, insbesondere die letzte und vorletzte Scheibe, jeweils an einer definierten Position zu liegen kommen, speziell derart, dass die Relativposition der vorletzten Scheibe 2b und der Rückhaltevorrichtung 14 zueinander im vorgesehenen, oben beschriebenen Bereich gewahrt ist. Die Platte 19 ist aus dieser ersten Stellung in eine zweite Stellung bewegbar, indem sie beispielsweise in Vorschubrichtung 7 verschiebbar oder aus der schachtbegrenzenden ersten Stellung hinaus verschwenkbar oder hinaus verkippbar ist. Im hier gezeigten Beispiel ist sie speziell in eine zweite Stellung abgesenkbar, wobei die Distanz zum Schachtende mindestens einer doppelten durchschnittlichen Dicke einer Scheibe 2 eines im Schacht befindlichen Stapels 4 entspricht.

In ihrer zweiten Funktion ist die Platte 19 Teil einer Trennvorrichtung 22, welche des Weiteren eine Ansaugeinrichtung 16 umfasst, so dass sie im Rahmen dessen als Saugplatte ausgebildet ist. Das heißt, dass sie beispielsweise als Hohlplatte ausgebildet ist, welche eine mit Ansauglöchern (vgl. Fig. 2) versehene, dem Schacht 6 zugewandte Ansaugfläche aufweist und eine der Ansaugfläche gegenüberliegende geschlossene hintere Fläche sowie geschlossene Seitenwände. Die hintere Fläche oder eine der Seitenwände weist einen Anschluss für das Anschließen einer Unterdruckleitung 18 auf, welche beispielsweise zu einem Kompressor bzw. zu einer Saugpumpe (nicht dargestellt) führt. Über die Ansauglöcher und die Leitung 18 kann die Umgebungsluft abgesaugt werden. Durch das dabei entstehende Teil-Vakuum zwischen Saugplatte 19 und der auf ihr aufliegenden letzten Scheibe 2a des im Schacht 6 ruhenden Stapels 4 kann die letzte Scheibe 2a auf der Platte 19 festgehalten werden und bleibt an dieser haften, wenn die Saugplatte 19 in Vorschubrichtung 7 - in die zweite Stellung - abgesenkt wird. Werden die vorletzte Scheibe 2b und der Rest des Stapels 4 durch die Rückhaltevorrichtung 14 in Position gehalten, kann die letzte Scheibe 2a mittels Unterdruck zusammen mit der Platte 19 zuverlässig vom Stapel 4 entfernt werden und die letzte Scheibe 2a vom Stapel 4 getrennt werden, ohne dass die letzte Scheibe 2a oder die vorletzte Scheibe 2b Gefahr laufen beschädigt, zerbrochen oder verformt zu werden. Dies selbst dann, wenn die Scheibe 2a aufgrund ihrer Konsistenz an ihrem Stapelnachbarn der vorletzten Scheibe 2b haftet und sich etwa nicht alleine durch die Schwerkraft von dieser lösen würde. Ein Wechsel zwischen der schachtbegrenzenden ersten Stellung und der zweiten, unteren Stellung kann beispielsweise pneumatisch mit einem Linearzylinder oder durch einen Elektroantrieb erfolgen. Ist die letzte Scheibe 2a vom Stapel 4 getrennt und befindet sich die Platte 19 mit der letzten Scheibe 2a in der zweiten Stellung, kann die letzte Scheibe 2a durch Aufhebung des Unterdrucks freigegeben werden, so dass sie von der Platte 19 beschädigungsfrei an einen weiteren Ort übergeben bzw. aus der Vereinzelungsvorrichtung 1 hinaus transportiert werden kann.

Um die letzte Scheibe 2a aus der Vereinzelungsvorrichtung 1 hinaus, zum Beispiel an eine der Vereinzelungsvorrichtung 1 nachgeordneten weiteren Verarbeitungsstation oder, wie hier dargestellt an ein nachgeordnetes Förderband 5 zu übergeben, ist die Vorrichtung 1 mit einem Auswerfer 15 versehen. Der Auswerfer 15 weist in diesem Beispiel einen Stössel 17 auf. In seiner Grundstellung ist der Auswerfer 15 mit seinem Stössel 17 in Vorschubrichtung 7 gesehen der Rückhaltevorrichtung 14 nachgeordnet und derart neben dem Schacht 6 der Vereinzelungsvorrichtung 1 angeordnet, dass er die Freigabe des Schachts 6 durch die Platte 19 nicht behindert. Außerdem ist er so angeordnet, dass er beispielsweise mit einer lateralen Bewegung seines Stössels 17 eine letzte Scheibe 2a, welche in der zweiten Stellung auf der Platte 19 liegt, bei deaktiviertem Unterdruck, von der Platte hinunter zum Beispiel auf das Förderband 5 schieben kann. Der Stößel 17 wird dabei in diesem Beispiel zwischen der Rückhaltevorrichtung 14 und der Platte 19 über die Platte 19 geführt, also in etwa orthogonal zur Vorschubrichtung 7 bewegt. Der Stössel 17 des Auswerfers 15 kann beispielsweise wiederum pneumatisch mit einem Linearzylinder oder durch einen Elektroantrieb bewegt werden. Das Aktivieren und deaktivieren des Unterdruckes kann z.B. durch entsprechende Ventileinrichtungen oder durch Aktivierung und Deaktivierung der Saugpumpe erfolgen.

Wie bereits erwähnt, kann alternativ zu einer linearen Bewegung der Saugplatte 19 in Vorschubrichtung 7 in eine zweite Stellung die Platte 19 auch nichtlinear aus der ersten Stellung in die zweite Stellung bewegt werden. Hierzu kann sie beispielsweise an einem Scharnier weggklappabr oder an einem Angelpunkt aus der Vorschubrichtung des Schachts hinaus verschwenkbar fixiert sein. Das Scharnier bzw. der Angelpunkt können an einem Gehäuse der Vorrichtung (nicht dargestellt) angelenkt sein, das beispielsweise auch den Schacht 6 und den Auswerfer 1 trägt, so dass die Platte 19 in einer Teilkreisbewegung aus der Vorschubrichtung 7 des Schachts weggeklappt bzw. hinaus geschwenkt werden kann.

Die Vereinzelungsvorrichtung 1 ist derart ausgebildet, dass sie den Hygiene-Anforderungen an die Lebensmittelverarbeitende Industrie genügt. Insbesondere die verwendeten Materialien entsprechen den Lebensmittelhygienevorschriften. So werden beispielsweise nur für die Lebensmittelverarbeitung zugelassene, rostfreie Stähle verwendet und Lager und Aktoren hermetisch abgedichtet. Der Aufbau ist so gewählt, dass die Vorrichtung einfach und hygienisch zu reinigen ist.

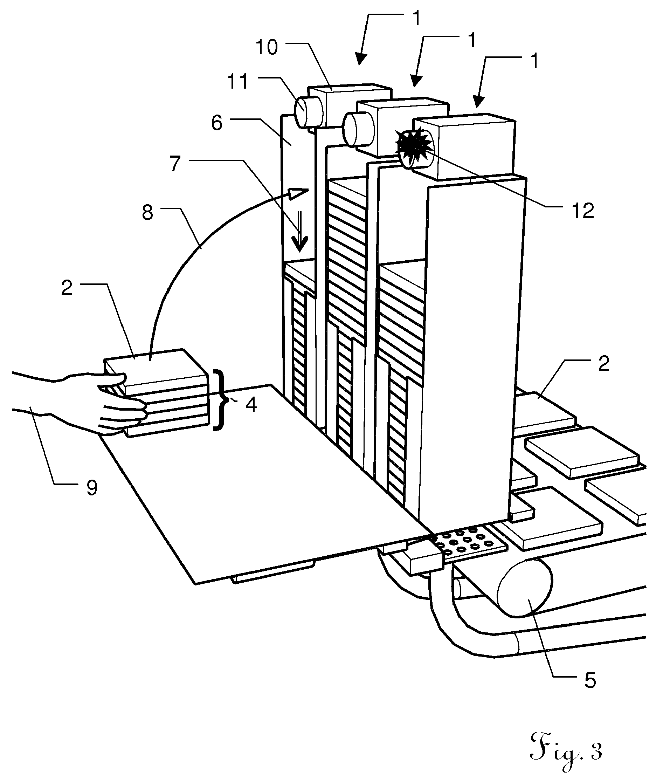

**Fig. 3** zeigt eine zweite Ausführungsform einer erfindungsgemäßen Vereinzelungsvorrichtung 1, die sich im Wesentlichen dadurch von der Vorrichtung aus den Figuren 1 und 2 unterscheidet, dass hier exemplarisch drei der Vereinzelungsvorrichtungen 1 der dort beschriebenen Art nebeneinander angeordnet und zu einer Vorrichtung zusammengefasst sind. In den drei nebeneinander angeordneten Vereinzelungsvorrichtungen 1 werden hier parallel Stapel 4 aus Scheiben 2 desselben Produkts (wie etwa Brotscheiben) oder parallel Stapel aus verschiedenen Produkten (wie etwa Brot- und Käse- oder Leberkäse-Scheiben) vereinzelt.

Die Stapel 4 aus Lebensmittelscheiben werden derart in einen Schacht eingebracht, dass die Scheiben 2 in einer (durch einen Pfeil dargestellten) Vorschubrichtung 7 aneinander liegen. Auf diese Weise ist es möglich jeweils die in Vorschubrichtung 7 gesehen letzte Scheibe vom Stapel zu entfernen, wie dies oben bereits im Detail beschrieben ist. Werden die Stapel 4 aus Lebensmittel-Scheiben 2 immer in gleicher Orientierung in den Schacht 6 bzw. die Schächte 6 eingelegt, haben die Scheiben 2 auch eine definierte immer gleiche Orientierung ausgangsseitig der Vorrichtung 1 bei Übergabe an beispielsweise das hier dargestellte Förderband 5 oder eine weitere Verarbeitungsstation. Der Querschnitt des Schachtes 6 bzw. der Schächte 6 ist angepasst an die flächigen Dimensionen der zu verarbeitenden Scheiben 2, so dass die Scheiben 2 in Vorschubrichtung 7 derart formschlüssig im Schacht 6 geführt werden, dass sie problemlos in diesem gleiten können.

In einer besonders vorteilhaften Ausgestaltung der Vorrichtung sind Wände des Schachts 6 derart zueinander verschiebbar, dass sie den Dimensionen der zu verarbeitenden Lebensmittel jeweils optimal angepasst werden können.

Werden die in diesem Beispiel gezeigten drei Vorrichtungen 1 alle synchron angesteuert, so können die Scheiben 2 zueinander in Reihen ausgerichtet auf dem nachgeordneten Förderband 5 abgelegt werden, bei asynchroner Ansteuerung entsprechend versetzt. Aus der Taktrate der Vorrichtung 1 und der Geschwindigkeit des Förderbands 5 definiert sich dabei der Abstand zwischen den vereinzelten Scheiben 2 in Transportrichtung.

Ein Vorteil der hier beschriebenen erfindungsgemäßen Vorrichtung ist, dass die Vereinzelung derart gestaltet werden kann, dass die vereinzelten Scheiben ausgangsseitig der Vorrichtung gut positioniert und ausgerichtet bereitgestellt werden, sodass je nach Anforderung an die Positionierungs- und Orientierungsgenauigkeit unter Umständen ein nachfolgendes Positionieren und/oder Orientieren (manuell oder durch ein Handling-Gerät) vermieden werden kann.

Im gezeigten Beispiel werden die Scheiben-Stapel 4 manuell vorbereitet (z.B. aus einer Verpackung ausgepackt und in die passende Orientierung gebracht) und auch das Einlegen 8 der Stapel 4, hier durch einen Pfeil 8 angedeutet, erfolgt mit der Hand 9. In einer anderen Ausführungsform könnte das Einbringen der Stapel 4 in den Schacht 6 auch automatisiert erfolgen.

An einem vordere Ende des Schachts 6, an dem die Stapel 4 eingelegt werden, ist im gezeigten Beispiel ein Füllstandssensor 10 für den Schacht 6 angebracht, mit welchem überwacht werden kann, ob sich Scheiben 2 im Schacht 6 befinden und gegebenenfalls auch wie viele Scheiben 2 sich aktuell im Schacht befinden. Im gezeigten Beispiel handelt es sich um eine berührungslosen Abstandssensor, welcher einen Abstand vom Füllstandssensor 10, also vom ersten Ende des Schachts 6, zur obersten Scheiben 2 im Schacht 6 bestimmt. Dies kann beispielsweise auf bekannte Weise optisch, kapazitiv oder mit Ultraschall geschehen. An dem Füllstandssensor 10 ist eine Warneinrichtung 11 angebracht, welche bei Erreichen eines kritischen Füllstands eine Warnung 12 ausgibt, z.B. in Form eines akustischen, optischen oder haptischen Signals und/oder durch ein elektrisches Signal oder eine Nachricht an eine Leitstation. Die Warnung 12 kann beispielsweise auch einen Arbeiter dazu auffordern einen neuen Stapel 4 in den entsprechenden Schacht 6 einzulegen. Bei niedrigem Füllstand im Schacht 6 kann auch die Verarbeitungsgeschwindigkeit einer auf die Vereinzelungsvorrichtung 1 folgende Weiterverarbeitungsanlage gedrosselt werden, um ein Leerlaufen der Anlage zu vermeiden, und/oder die Anlage bei einem Leerlaufen der Vorrichtung 1 allenfalls gestoppt werden. Mit diesem Füllstands-Sensor 10 kann auch das Einlegen 8 eines neuen Stapels 4 durch den Benutzer detektiert werden.

Alternativ zu dem hier dargestellten Abstandssensor 10 können im Schacht 6 auch andere Mittel zur Schachtüberwachung angebracht sein, beispielsweise diskrete, taktile oder berührungslose Schaltelemente in zumindest einer Position entlang der Vorschubrichtung 7 im Schacht 6. Ebenso kann der Schacht 6 mittels einer Kamera und elektronischer Bilderkennung überwacht werden.

Mit der oben beschriebenen Überwachung des Schachts 6 können auch sicherheitstechnische Aspekte der Vorrichtung 1 abgedeckt werden. Beispielsweise könnte der Abstandssensor, die Kamera oder ein sonstiger Sensor mit der Steuerung verbunden sein und derart konfiguriert sein, dass er das Eingreifen einer Hand 9 oder das Eindringen eines Fremdkörpers in den Schacht 6 und insbesondere in den Bereich des Schachts 6, in den die Rückhaltevorrichtung 14 mit ihren Vorsprüngen 20 in den Schacht 6 eingreifen könnte, erkennt. In Reaktion darauf könnte die Steuerung mit einem entsprechenden Warnsignal oder einem Notaus der Vorrichtung 1 reagieren.

Es versteht sich, dass eine Schachtüberwachung, wie sie oben beschrieben wurde unabhängig von der Anzahl Vereinzelungsvorrichtungen 1 in einer Vorrichtung bzw. unabhängig von der Anzahl Schächte 6 vorgesehen sein kann, also insbesondere auch bei nur einem Schacht, zwei Schächten und mehr als drei Schächten. Es ist weiterhin auch klar, dass für jeden Schacht eine solche Schachtüberwachung vorgesehen sein kann.

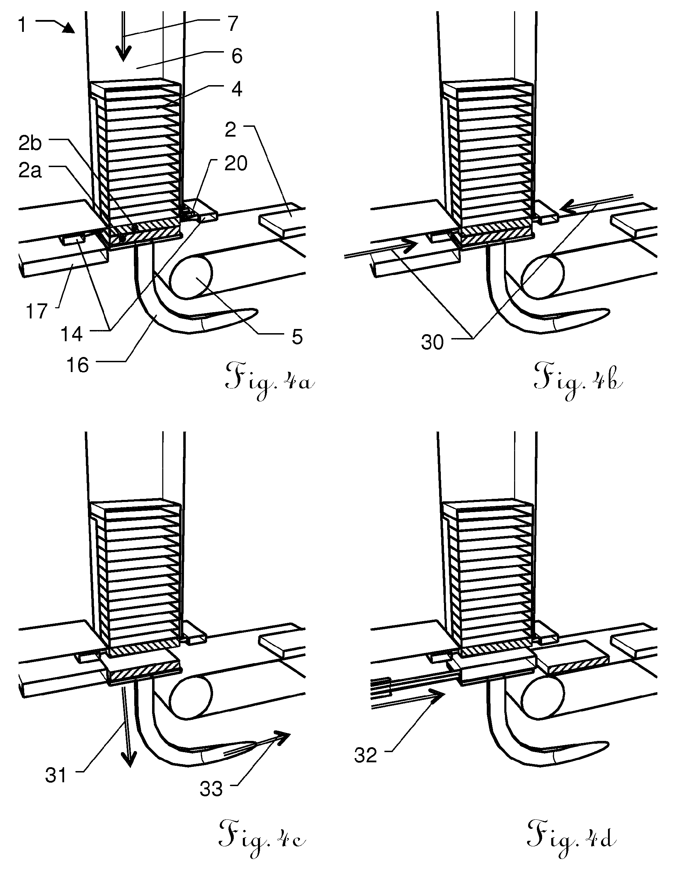

Anhand der in den Figuren 4a bis 4f gezeigten Schnittdarstellungen der Vereinzelungsvorrichtung aus Fig. 1 wird im Folgenden eine erste Variante des erfindungsgemäßen Vereinzelungsverfahren näher beschrieben.

**Fig. 4a** zeigt die Vereinzelungsvorrichtung 1 aus Figur 1 mit eingelegtem Stapel 4 aus Scheiben 2. Die Platte 19 der Ansaugeinrichtung 16 befindet sich in ihrer ersten, den Schacht 6 begrenzenden Stellung. Die Rückhaltevorrichtung 14 ist geöffnet und gibt den Schacht 6, in welchem sich der Stapel 4 befindet frei, sodass der Stapel 4 entlang des Schachts 6 nach unten durchrutschen kann bis die letzte Scheibe 2a des Stapels 4 auf der Platte 19 und somit auf der Als Trennvorrichtung 22 fungierenden Ansaugeinrichtung 16 liegt. Die Platte 19 der Ansaugeinrichtung 16 und die Rückhaltevorrichtung 14 sind dabei derart zueinander angeordnet, dass sich die Rückhaltevorrichtung 14 auf Höhe der vorletzten Scheibe 2b des Stapels 4 befindet. Der Auswerfer 15 ist wiederum mit einem Stössel 17 versehen, der sich in seiner Grundstellung, ebenfalls ausserhalb des Schachts 6 befindet.

In den folgenden Fig. 4b bis 4f wird zwecks besserer Übersichtlichkeit auf die jeweils gleich bleibenden Bezugszeichen verzichtet.

In dem in **Fig. 4b** dargestellt Schritt der Vereinzelung wird die die Rückhaltevorrichtung 14 - wie mit den Pfeilen 30 angedeutet - geschlossen. Dabei dringen die gezeigten Vorsprünge 20 in Form von Spiessen oder Nadeln in die in Vorschubrichtung 7 vorletzte Scheibe 2b ein, vorzugsweise annähernd in der Mitte der Dicke der Scheibe 2b. Da die Scheibe 2b dabei im Stapel 4 von den angrenzenden Scheiben 2 des Stapels 4 und von den Schachtwänden stabilisiert wird, kann diese nicht ausweichen, sich verformen oder verbiegen. Die Bewegung der Vorsprünge 20 der Rückhaltevorrichtung 14 erfolgt vorzugsweise linear von der Seite in die Scheibe 2b, je nach zu verarbeitendem Lebensmittel sind aber auch andere Bewegungen, wie beispielsweise auch eine Schwenkbewegung denkbar.

**Fig. 4c** stellt einen weiteren Schritt der Vereinzelung dar, bei welchem die Ansaugeinrichtung 16 mit einem durch den Pfeil 33 symbolisierten Unterdruck beaufschlagt wird, sodass die letzte Scheibe 2a von der Ansaugplatte 19 angesaugt wird und durch den Unterdruck an dieser haftet. Die Ansaugplatte 19 kann dabei statt als Platte mit Ansauglöchern auch mit einem Gitter hin zur Scheibe 2a ausgestattet sein oder ähnlich eines Saugnapfes ausgebildet sein. Alternativ kann der Unterdruck auch schon zuvor, etwa bei dem in Fig. 4a oder Fig. 4b erläuterten Schritt aufgebaut werden.

Ist der Unterdruck aufgebaut, was insbesondere auch durch einen Drucksensor überwacht werden kann, so wird die Ansaugeinrichtung 16 - wie mit dem Pfeil 31 symbolisiert - in ihre zweite, hier untere Stellung bewegt. Durch die Saugwirkung des Unterdruckes haftet die letzte Scheibe 2a zuverlässig an der Ansaugeinrichtung 16 und wird somit von der vorletzten Scheibe 2b, welche durch die Rückhaltevorrichtung 14 zurückgehalten wird, abgelöst. Sollte in einem Fehlerfall die letzte Scheibe 2a bei der Bewegung der Ansaugeinrichtung 16 in ihre zweite Stellung aus irgendeinem Grund nicht an der Ansaugplatte 19 haften, so liesse sich dies z.B. ebenfalls mit dem erwähnten Drucksensor detektieren.

Während des in **Fig. 4d** dargestellten weiteren Schritts befindet sich die Ansaugeinrichtung 16 mit der Scheibe 2a in der zweiten Stellung. Der Unterdruck kann nun, nach dem Ablösen der letzten Scheibe 2a von der vorletzten Scheibe 2b des Stapels 4, deaktiviert werden. Die Scheibe 2a liegt dann lose auf der Ansaugeinrichtung 16. Wie mit dem Pfeil 32 angedeutet wird die Scheibe 2a nunmehr mit dem Stössel 17 des Auswerfers 15 ausgeworfen bzw. dem nächsten Prozessschritt zugeführt, also im gezeigten Beispiel auf das Förderband 5 geschoben.

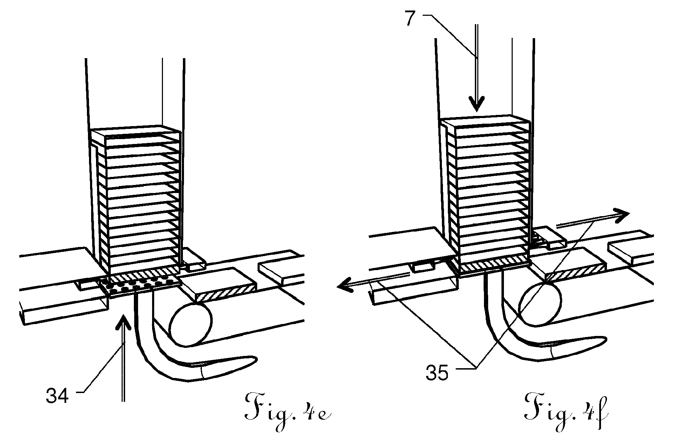

**Fig. 4e** stellt einen weiteren Schritt der Vereinzelung dar, bei welchem die leere Platte 19 der Ansaugeinrichtung 16 - wie mit Pfeil 34 angedeutet - in die erste, den Schacht begrenzende Stellung zurückbewegt wird. Da die zuvor letzte Scheibe 2a nun bereits vereinzelt ist und also am Stapelende fehlt, befindet sich zwischen der Platte 19 und der von der geschlossenen Rückhaltevorrichtung 14 gehaltenen Scheibe 2b ein Abstand von zumindest annähernd einer Scheibendicke.

In **Fig. 4f** wird die Rückhaltevorrichtung 14 - wie mit den Pfeilen 35 symbolisiert - wieder geöffnet. Die vormals vorletzte Scheibe 2b wird zur letzten Scheibe 2a des Stapels 4. Sie und der gesamte Stapel 4 werden durch die Öffnungsbewegung der Rückhaltevorrichtung 14 freigegeben und der Stapel 4 bewegt sich in Vorschubrichtung 7. Diese Stellung der Vorrichtung ist äquivalent zu jener von Fig. 4a. Bei dem dort gezeigten und beschriebenen Schritt wird nun wieder von neuem begonnen, um die nächste Scheibe zu vereinzeln.

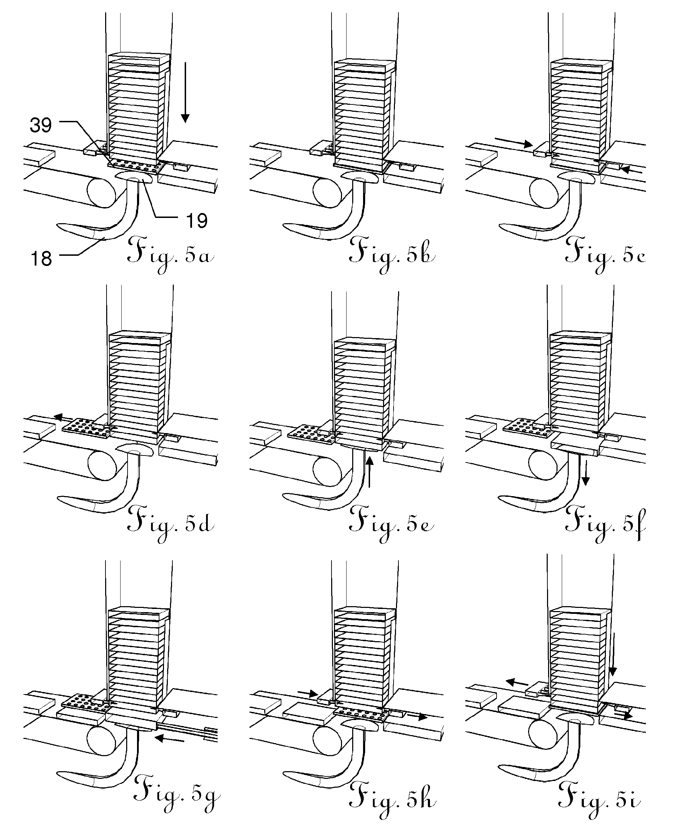

**Fig. 5a bis Fig. 5i** zeigen eine andere Ausführungsform der erfindungsgemäßen Vereinzelungsvorrichtung 1, bei welcher Auflageplatte 39, auf welcher die letzte Scheibe 2a des Stapels 4 zunächst aufliegt, getrennt von der Ansaugeinrichtung 16 ausgebildet ist. Die Auflageplatte 39 dient in dieser Ausführungsform allein der Abstützung des Stapels und separat von der Ansaugeinrichtung 16 aus der Vorschubrichtung des Schachts hinaus bewegbar.

In Fig. 5a sind der Übersichtlichkeit halber nur jeweils die gegenüber Fig. 3 bzw. Fig. 4a geänderten Komponenten mit Bezugszeichen versehen, jedoch nicht die restlichen, gegenüber den vorherigen Abbildungen gleich gebliebenen Teile. Da Fig. 5b bis Fig. 5i dieselben Komponenten zeigen wurde auch hier auf Bezugszeichen verzichtet.

In **Fig. 5a** ist die Rückhaltevorrichtung 14 geöffnet und der Stapel 4 im Schacht 6 rutscht in Vorschubrichtung 7 nach unten, bis die letzte Scheibe 2a des Stapels auf der Auflageplatte 39 aufliegt, was in **Fig. 5b** gezeigt ist. In **Fig. 5c** wird nun die Rückhaltevorrichtung 14 geschlossen, sodass diese die vorletzte Scheibe 2b im Stapel 4 in Vorschubrichtung 7 fixiert. In **Fig. 5d** wird die Auflageplatte 39 unter dem Schacht 6 herausbewegt, wobei die darauf liegende Scheibe 2a von einem Rückhalter bzw. von einer Seitenwand des Schachts 6 daran gehindert, sich mit der Auflageplatte 39 mitzubewegen. Haftet die letzte Scheibe 2a an der vorletzten Scheibe 2b kann sie durch die Trennvorrichtung 22 mit ihrer Ansaugeinrichtung 16 und den mit dem Schlauch 18 zugeführten Unterdruck auf die Ansaugeinrichtung 16 gesogen werden. Zu einem solchen Ansaugen der Scheibe 2a kann - wie in **Fig. 5e** gezeigt - die Ansaugeinrichtung 16 gegebenenfalls auch zur Scheibe 2a hin bewegt werden, sodass die Saugeinrichtung 16 direkt an der Scheibe 2a anliegt, womit eine höhere Saugkraft erzielbar ist. Die Ansaugeinrichtung 16 kann dann mit der angesaugten Scheibe 2a wieder vom Schacht 6 weg in die in **Fig. 5f** gezeigte Position bewegt werden. Haftet die letzte Scheibe 2a aber nicht an der vorletzten Scheibe 2b des Stapels 4 kann sie statt dessen selbst nach unten auf die Ansaugeinrichtung 16 fallen - was ebenfalls in einer Situation resultiert, wie sie in **Fig. 5f** dargestellt ist.

In **Fig. 5g** wird nun mit dem Auswerfer 15 bzw. mit dessen linear bewegbaren Stössel 17 die Scheibe 2a von der Saugeinrichtung 16 auf das Förderband 5 verschoben. Wie in **Fig. 5h** gezeigt, werden dann der Stössel 17 des Auswerfers 15 und die Auflageplatte 39 wieder in ihre Ausgangslage (vgl. Fig. 5a) bewegt und in **Fig. 5i** die Rückhaltevorrichtung 14 geöffnet, sodass der Stapel 4 um eine Scheibe 2 weiter nach unten nachrutscht - was der Lage von Fig. 5b entspricht - und der Ablauf von neuem beginnen kann.

In einer anderen, nicht gezeigten Ausführungsform kann die Funktion von Auflageplatte 39 und Auswerfer 15 auch zusammengefasst werden, so dass die Auflageplatte 39 zugleich die Funktion des Auswerfers 15 übernimmt. Statt, wie es in Fig. 5d gezeigt ist, würde die Auflageplatte 39 nicht in Richtung des Förderbands 5 sondern in entgegengesetzter Richtung unter dem Schacht 6 herausbewegt werden. Die Scheibe 2a könnte nach unten fallen oder angesaugt werden, so dass sie schliesslich auf der Ansaugeinrichtung 16 zu liegen kommt. Die Ansaugeinrichtung 16 wird in eine Position unter dem Schacht bewegt, in der die Ansaugplatte 39 knapp über sie hinweg in Richtung des Förderbands 5 bewegt werden kann. Liegt die Scheibe 2a, ohne durch Unterdruck angesaugt zu werden, auf der Ansaugeinrichtung 16, so kann sie bei einer solchen Bewegung der Ansaugplatte 39 über die Ansaugeinrichtung 16 hinweg, durch diese (vorzugsweise etwa mittig) von der Seite erfasst und auf das Förderband 5 geschoben werden. Eine seitliche Fläche der Auflageplatte 39 übernimmt dabei also die Funktion des Stössels 15 des Auswerfers 15, wodurch eine Bewegungsachse eingespart werden kann. Die Saugeinrichtung 16 kann dazu beispielsweise in einem Abstand zum Schachtende angeordnet sein, dass die Scheibe 2a nur um etwa eine halbe Scheibendicke nach unten fallen bzw. gesogen werden muss. Bei einem solch geringen Abstand zwischen Saugeinrichtung 16 und Scheibe 2a kann gegebenenfalls auch auf eine Bewegung der Ansaugeinrichtung 16 verzichtet werden, da die Saugwirkung über den geringen Spalt von etwa einer halben Scheibendicke möglicherweise bereits hinreichend gross ist, um diese zuverlässig von der Scheibe 2b abzulösen, selbst wenn diese aneinander haften.

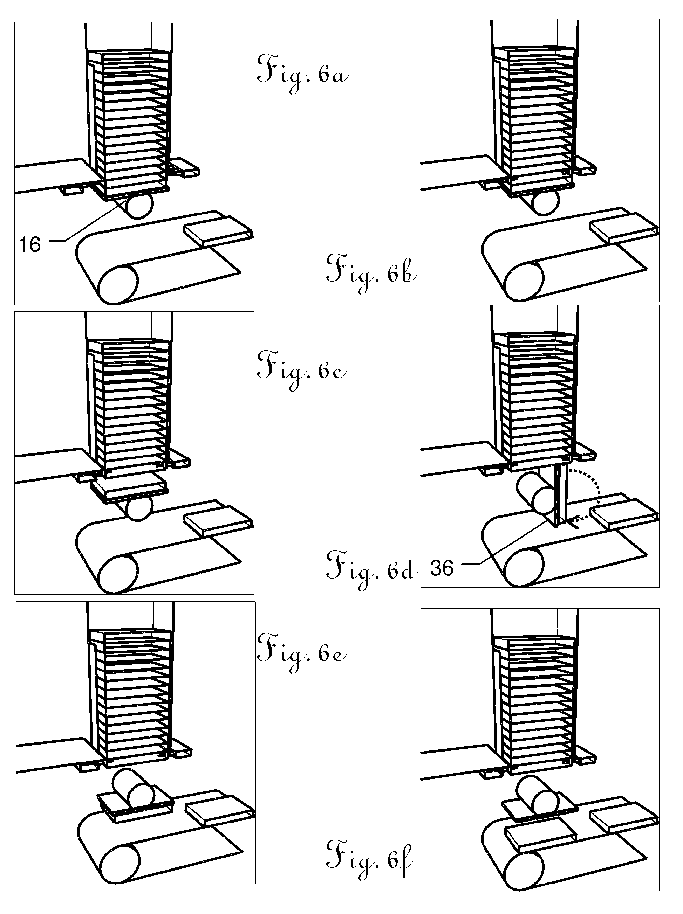

**Fig. 6a bis Fig. 6f** zeigt eine Ausführungsform der erfindungsgemäßen Vereinzelungsvorrichtung 1, bei welcher die Trennvorrichtung zugleich als Auswerfers 15 fungiert. Die Ansaugeinrichtung 16 ist hierfür mit einem Kippmechanismus ausgestattet und über der Aufnahme einer weiteren Arbeitsstation oder einem Förderband 5 angeordnet oder dorthin bewegbar. In **Fig. 6a** (links oben) liegt der Stapel 4 auf der Ansaugeinrichtung 16 auf. In **Fig. 6b** (rechts oben) fixiert die Rückhaltevorrichtung 14 die vorletzte Scheibe 2b. In **Fig. 6c** wird - während die Scheibe 2a mittels Unterdruck an der Ansaugeinrichtung 16 gehalten wird - diese von der Scheibe 2b abgelöst. Dabei können entweder der Schacht 6 und die Rückhaltevorrichtung 14 eine Hubbewegung ausführen und den Stapel 4 mit der vorletzten Scheibe 2b von der letzten auf der Ansaugvorrichtung 16 aufliegenden letzten Scheibe 2a trennen oder aber wie auch in den vorherigen Beispielen, die Ansaugvorrichtung 16 mit der an ihr festgesaugten letzten Scheibe 2a werden vom Schacht 6 und dem darin befindlichen Stapel 4 mit der vorletzten Scheibe 2b weg bewegt. Schliesslich resultiert eine Situation, wie sie in **Fig. 6d** angedeutet ist, in der ein genügend großer Abstand zwischen Ansaugvorrichtung 16 und Schacht 6 besteht, dass eine Kippbewegung der Ansaugvorrichtung 16 möglich wird. Statt einer Kippbewegung um ihre zentrale Achse, wie hier dargestellt, ist natürlich auch eine Kippbewegung um eine seitliche, am Rand der Ansauganrichtung 16 angeordnete Achse denkbar. Die Ansaugvorrichtung 16 wird auf das Förderband 5 zu verkippt, und zwar in diesem Beispiel so weit, dass die Scheibe 2a nicht mehr dem Schacht 6 zugewandt sondern dem Förderband 5 zugewandt an der Ansaugvorrichtung 16 haftet. Hier also um 180°, vgl. **Fig. 6e****.** In **Fig. 6f** wird nunmehr der Unterdruck deaktiviert, wodurch die Scheibe 2a auf das Förderband 5 fällt. Im Anschluss können die Ansaugeinrichtung 16 bzw. der Schacht 6 und die Rückhaltevorrichtung 14 wieder in ihre Ausgangsstellung (vgl. Fig. 6a) bewegt werden, und dann die Fixierung durch die Rückhaltevorrichtung 14 gelöst, und erneut mit dem Ablauf begonnen werden.

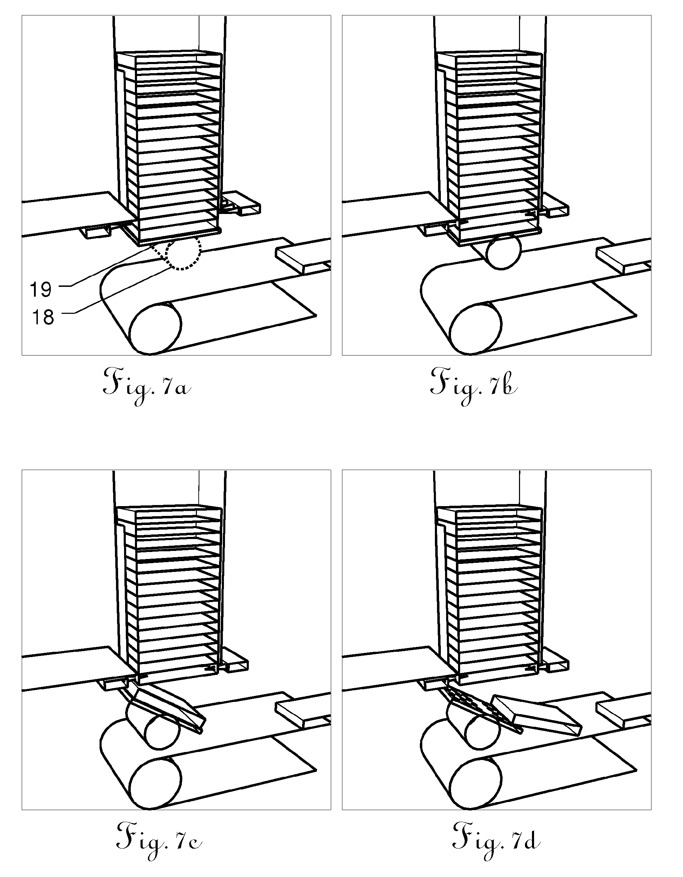

**Fig. 7a bis Fig. 7d** zeigen eine weitere Ausführungsform der erfindungsgemäßen Vereinzelungsvorrichtung 1 mit einem gegenüber der in den Figuren 6a bis 6f gezeigten Ausführungsform geänderten Kippmechanismus der Ansaugeinrichtung 16. Auch hier sind Trennvorrichtung 22 und Auswerfer 15 also in einer mechanischen Einheit zusammengeführt. Dieser Kippmechanismus kann als eine Ausführungsvariante des oben bereits erwähnten Scharnier-Mechanismus für die Bewegung der Saugplatte 19 angesehen werden. Dabei liegt in **Fig. 7a** der Stapel 4 wieder auf der Ansaugeinrichtung 16 auf und in **Fig. 7b** wird die vorletzte Scheibe 2b mit der Rückhaltevorrichtung 14 fixiert. Unter Aufbringung des Unterdruckes and der Ansaugeinrichtung 16 wird diese nunmehr wie in **Fig. 7c** gezeigt nach unten weggekippt, sodass dabei die letzte, vom Unterdruck gehaltene Scheibe 2a vom Stapel 4 abgelöst wird. In **Fig. 7d** ist wird der Unterdruck deaktiviert, und die Scheibe rutscht von der Ansaugeinrichtung 16. Gegebenenfalls kann ein Abstossen der Scheibe von der Ansaugeinrichtung 16 auch durch kurzes einblasen von Druckluft unterstützt werden.

Dem Fachmann ist klar, dass und in welcher Weise sich die beschriebenen Ausführungsformen bzw. die anhand der Ausführungsbeispiele beschriebenen Details innerhalb des durch die Patentansprüche gesteckten Rahmens sinnvoll kombinieren lassen. Aus Platzgründen ist es aber nicht möglich, alle möglichen und sinnvollen Kombinationen im Detail figürlich darzustellen und/oder zu beschreiben.

## Patentansprüche

1. Vereinzelungsvorrichtung (1) zur Vereinzelung von in Stapeln (4) bereitgestellten Scheiben (2) von Lebensmitteln mit:
■ einem Schacht (6) zur Aufnahme des Stapels (4) von Scheiben (2) und zur Führung der Scheiben (2) in eine Vorschubrichtung (7), und mit
■ einem Auswerfer (15), welcher in eine Vorschubrichtung (7) gesehen ausgangsseitig (3) des Schachts (6) angeordnet ist und dem Fortbewegen einer vereinzelten Scheiben (2) aus der Vorrichtung (1) dient,
**dadurch gekennzeichnet, dass**
■ in Vorschubrichtung (7) gesehen im Bereich des ausgangsseitigen Schachtendes (3) vor dem Auswerfer (15), eine Rückhaltevorrichtung (14) vorgesehen ist, mit welcher eine vorletzte Scheibe (2b) des Stapels (4) und mit selbiger der gesamte Stapel (4) im Schacht (6) fixierbar ist; und
■ in Vorschubrichtung (7) gesehen im Bereich des Schachtendes (3), der Rückhaltevorrichtung (14) nachgeordnet eine Trennvorrichtung (22) vorgesehen ist, mit welcher eine letzte (Scheibe 2a) des Stapels (4) von der vorletzten Scheibe (2b) des Stapels (4) ablösbar ist.

2. Vereinzelungsvorrichtung (1) nach Anspruch 1,
**dadurch gekennzeichnet, dass**
■ die Rückhaltevorrichtung (14) in eine geschlossene Stellung und eine geöffnete Stellung bewegbar ist, und
■ Vorsprünge (20) aufweist, die in Richtung Schachmitte ausgerichtet sind und insbesondere in Form von Nadeln, Spießen oder Dornen ausgebildet sind; wobei
■ die Vorsprünge (20) in der geschlossenen Stellung der Rückhaltevorrichtung (14) seitlich in den Schacht (6) und im Betrieb in die vorletzte Scheibe (2b) eindringen und diese fixieren,
■ und in der geöffneten Stellung außerhalb des Schachts (6) liegen und diesen in Vorschubrichtung (7) freigeben.

3. Vereinzelungsvorrichtung (1) nach Anspruch 1 oder 2,
**dadurch gekennzeichnet, dass**
die Trennvorrichtung (22) eine dem ausgangsseitigen Schachtende (3) gegenüberliegende Ansaugeinrichtung (16) umfasst, mit welcher während des Betriebs mittels Unterdruck die letzte Scheibe (2a) von der vorletzten Scheibe (2b) des Stapels (4) ablösbar ist.

4. Vereinzelungsvorrichtung (1) nach Anspruch 3,
**dadurch gekennzeichnet, dass**
die Ansaugeinrichtung (16) zwischen einer ersten nahe dem Schachtende(3) gelegnen und, insbesondere im Betrieb die letzte Scheibe (2a) des Stapels (4) berührenden Stellung, sowie einer zweiten Stellung in größerer Distanz zum Schachtende (3) beweglich ist, wobei Unterdruck und Bewegungsgeschwindigkeit so gewählt sind, dass im Betrieb durch die Bewegung von der ersten in die zweite Stellung, die letzte Scheibe (2a) des Stapels (4) von der vorletzten Scheibe (2b) ablösbar ist und in der zweiten Stellung die sich auf der Ansaugeinrichtung (16) befindliche letzte Scheibe (2a) auswerfbar ist.

5. Vereinzelungsvorrichtung (1) nach einem der Ansprüche 1 bis 4, **dadurch gekennzeichnet, dass**
der Auswerfmechanismus (15) einen Auswerfer mit einem Stößel (17) umfasst, wobei der Stößel (17) im Wesentlichen orthogonal zur Vorschubrichtung (7) im Schacht (6) bewegbar ist.

6. Vereinzelungsvorrichtung (1) nach den Ansprüchen 4 und 5,
**dadurch gekennzeichnet, dass**
der der Stößel (5) derart über die Ansaugeinrichtung (16) bewegbar ist, dass er im Betrieb eine sich auf der Ansaugeinrichtung (16) befindliche letzte Scheibe (2a) vor sich herschiebend aus der Vorrichtung (1) hinaus befördert.

7. Vorrichtung (1) nach einem der Ansprüche 1 bis 4,
**dadurch gekennzeichnet, dass**
die Trennvorrichtung (22) oder zumindest Teile der Trennvorrichtung (22) zugleich als Auswerfer (15) fungieren.

8. Vereinzelungsvorrichtung (1) nach einem der vorherigen Ansprüche,
**dadurch gekennzeichnet, dass**
der Schacht (6) eine Schachtüberwachung (10) mit einem Sensor aufweist, mit dessen Hilfe mindestens das Unterschreiten eines Grenzfüllstands im Schacht (6) und/oder eine Gefahr im Bereich der Rückhaltevorrichtung (14), nämlich insbesondere das Eingreifen einer Hand(9) oder das Eindringen eines Fremdkörpers in diesen Bereich detektierbar ist, wobei die Schachtüberwachung (10) mit einer Steuerung verbunden ist, welche bei Unterschreiten eines Grenzfüllstands bzw. bei Auftreten einer Gefahr im Bereich der Rückhaltevorrichtung (14) eine Warnung und/oder einen Notstopp auslöst.

9. Vereinzelungsvorrichtung (1) nach Anspruch 8,
**dadurch gekennzeichnet, dass**
der Sensor ein Kamera oder ein berührungsloser Abstandssensor ist, und insbesondere an der dem Schachtende (3) gegenüberliegenden Seite des Schachts (6) angeordnet ist.

10. Vorrichtung (1) zur Vereinzelung von in Stapeln (4) bereitgestellten Scheiben (2) von Lebensmitteln,
**dadurch gekennzeichnet, dass**
mehrere Vereinzelungsvorrichtung (1) gemäß den Ansprüchen 1 bis 9 nebeneinander angeordnet sind und die Vorrichtung (1) die Scheiben (2) reihenweise ausgibt, insbesondere an eine weitere Verarbeitungsstation oder auf ein Förderband (5), insbesondere zeitgleich für alle Schächte (6).

11. Verfahren zur Vereinzelung von in einem Stapel (4) bereitgestellten Scheiben (2) von Lebensmitteln mit folgenden Schritten:
■ Einlegen des Stapels (4) in einen Schacht (6), in welchem der Stapel (4) bzw. die Scheiben (2) in einer definierten Position in einer Vorschubrichtung (7) beweglich sind, vorzugsweise wobei die Vorschubrichtung (7) vertikal nach unten ist;
■ Halten des Stapels (4) in einer definierten Position im Schacht, in welcher die vorletzte Scheibe (2b) des Stapels (4) ausgangsseitig des Schachts (6) von einer Rückhaltevorrichtung (14) ergreifbar ist;
■ Fixieren der vorletzten Scheibe (2b) im Schacht (6) und somit Zurückhalten der vorletzten Scheibe (2b) und aller weiteren Schieben (2) des Stapels(4) außer der letzten Scheibe (2a) entgegen der Vorschubrichtung mittels der Rückhaltevorrichtung (14);
■ Abtrennen einer letzten Scheibe (2a) von der vorletzten Schiebe (2b) des Stapels (4) und Auswerfen derselben, wobei das Auswerfen insbesondere eine Übergabe an eine weiterverarbeitende Station oder auf ein Förderband (5) umfasst.

12. Verfahren nach Anspruch 10,
**dadurch gekennzeichnet, dass**
das Halten und Fixieren der vorletzte Scheibe (2b) und somit des gesamten Stapels (4) mittels der Rückhaltevorrichtung (14) durch ein seitliches Eindrücken von Vorsprüngen (20), insbesondere von Nadeln oder Dornen, der Rückhaltevorrichtung (14) in die vorletzte Scheibe (2b) erfolgt.

13. Verfahren nach Anspruch 10 bis 12,
**dadurch gekennzeichnet, dass**
das Abtrennen der letzten Scheibe (2a) von der vorletzten Scheibe (2b) des Stapels (4) durch Ansaugen der letzten Scheibe (2a) mittels Unterdruck einer Ansaugeinrichtung (16) und Wegbewegen der angesaugten Scheibe (2a) von der vorletzten Scheibe (2b) des Stapels (4) mittels der Ansaugeinrichtung (16) erfolgt.

14. Verfahren nach einem der Anspruch 13,
**dadurch gekennzeichnet, dass**
für ein Auswerfen der letzten Scheibe (2a) der Unterdruck in der Ansaugeinrichtung (16) deaktiviert wird.

15. Verfahren nach einem der Ansprüche 10 bis 13 , **dadurch gekennzeichnet, dass**
ein Füllstand an Scheiben (2) im Schacht (6) und/oder das Auftreten einer Gefahr im Bereich der Rückhaltevorrichtung (14) überwacht wird und bei Unterschreiten eines definierten Grenzfüllstands bzw. bei detektierter Gefahr im Bereich der Rückhaltevorrichtung eine Warnung (12) ausgegeben und/oder ein Notstopp durchgeführt wird.

16. Computerprogrammprodukt mit Programmcode, der auf einem maschinenlesbaren Träger gespeichert ist oder Computer-Daten-Signal, verkörpert durch eine elektromagnetische Welle, zur Durchführung des Verfahrens nach einem der Ansprüche 11 bis 15, insbesondere zur Ansteuerung von pneumatischen oder elektrischen Aktoren einer Vereinzelungsvorrichtung (1) nach einem der Ansprüche 1 bis 9 oder einer Vorrichtung nach Anspruch 10 zur Durchführung des Verfahrens, auf einer solchen.
